(19) Europäisches Patentamt
European Patent Office
Office européen des brevets

(11) **EP 4 769 819 A1**

(12) **EUROPEAN PATENT APPLICATION**
published in accordance with Art. 153(4) EPC

(43) Date of publication:
**01.07.2026 Bulletin 2026/27**

(21) Application number: **24861482.8**

(22) Date of filing: **07.04.2024**

(51) International Patent Classification (IPC):
*H01M 50/552* (2021.01)

(52) Cooperative Patent Classification (CPC):
**H01M 50/552; H01M 50/553;** Y02E 60/10

(86) International application number:
**PCT/CN2024/086438**

(87) International publication number:
**WO 2025/050631 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 CN 202311152901**

(71) Applicant: **Contemporary Amperex Technology Co., Limited**
**Ningde, Fujian 352100 (CN)**

(72) Inventors:
• **CHENG, Qi**
**Ningde, Fujian 352100 (CN)**
• **TAN, Yuanbo**
**Ningde, Fujian 352100 (CN)**
• **YANG, Kaihuan**
**Ningde, Fujian 352100 (CN)**
• **LI, Quankun**
**Ningde, Fujian 352100 (CN)**

(74) Representative: **Gong, Jinping**
**CocreateIP**
**Neumarkter Straße 21**
**81673 München (DE)**

(54) **BATTERY CELL, BATTERY, AND ELECTRICAL APPARATUS**

(57) The present application relates to the technical field of batteries, and provides a battery cell, a battery, and a power consuming apparatus. The battery cell (20) includes: a shell (21), where a first wall (211) of the shell is provided with an electrode leading-out hole (212); an electrode assembly (22), arranged in the shell, where the electrode assembly is provided with an electrode connecting member (221); and an electrode terminal (23), including a body (231) and a terminal post (232) protruding from one side of the body, where the terminal post penetrates through the electrode leading-out hole, and the body is arranged in the shell and is electrically connected to the electrode connecting member. The body has a first side surface (231a) and a second side surface (231b) arranged opposite to each other along a first direction. A distance between the first side surface and the terminal post is greater than a distance between the second side surface and the terminal post. The battery cell provided in the present application can optimize an arrangement space of components in the battery cell.

FIG. 6

## Description

The present application claims priority to Chinese Patent Application No. 202311152901.8, filed with the China National Intellectual Property Administration on September 7, 2023 and entitled "BATTERY CELL, BATTERY, AND POWER CONSUMING APPARATUS", which is incorporated herein by reference in its entirety.

## TECHNICAL FIELD

The present application relates to the technical field of batteries, and in particular to a battery cell, a battery, and a power consuming apparatus.

## BACKGROUND

Energy conservation and emission reduction are the key to the sustainable development of the automotive industry, and electric vehicles have become an important component of the sustainable development of the automotive industry due to their advantages in energy conservation and environmental protection. For electric vehicles, battery technology is also an important factor related to their development.

A power battery generally includes a battery cell. The arrangement space inside the battery cell is compact, causing the arrangement of components in the battery cell to be limited.

## SUMMARY

In view of this, an example of the present application provides a battery cell, a battery, and a power consuming apparatus, which can optimize an arrangement space of components in the battery cell.

According to a first aspect, an example of the present application provides a battery cell, including:

a shell, where a first wall of the shell is provided with an electrode leading-out hole;
an electrode assembly, arranged in the shell, where the electrode assembly is provided with an electrode connecting member; and
an electrode terminal, including a body and a terminal post protruding from one side of the body, where the terminal post penetrates through the electrode leading-out hole, and the body is arranged in the shell and is electrically connected to the electrode connecting member.

The body has a first side surface and a second side surface arranged opposite to each other along a first direction. A distance between the first side surface and the terminal post is greater than a distance between the second side surface and the terminal post.

The battery cell provided in this example of the present application includes a shell, an electrode assembly, and an electrode terminal. The first wall of the shell is provided with the electrode leading-out hole. The electrode assembly is provided with the electrode connecting member. Since the body of the electrode terminal is deviated relative to a centerline of the electrode leading-out hole and the terminal post, one end of the body can be used for connecting the electrode connecting member, and the other end can provide a certain avoidance space for the components in the battery cell, so as to optimize the arrangement space of the components in the battery cell. Moreover, since the electrode terminal is an eccentric structure, the electrode terminal itself has a high torsional strength.

In some examples, the body includes a terminal post connecting portion and a first extending portion. The terminal post connecting portion and the terminal post are correspondingly arranged along a thickness direction of the first wall. The first extending portion extends from the terminal post connecting portion along a first direction. The first direction is a length direction of the first wall.

A first welding mark is formed between the body and the electrode connecting member, and the first welding mark is at least partially located on the first extending portion.

By adopting the above technical solution, the body is deviated relative to the terminal post, the first welding mark between the body and the electrode connecting member is at least partially located within the first extending portion, and the first extending portion can serve as a welding area between the electrode terminal and the electrode connecting member. On the basis of optimizing a component layout space, the electrode terminal can meet the welding requirement.

In some examples, the body has a third side surface and a fourth side surface arranged opposite to each other along a second direction, and the second direction is a width direction of the first wall.

A distance between the third side surface and the terminal post is greater than a distance between the fourth side surface and the terminal post.

By adopting the above technical solution, the body is deviated relative to the terminal post along the length direction of the first wall, and at the same time, the body is also deviated relative to the terminal post along the width direction of the first wall, thus facilitating the welding of the tab to the electrode terminal, reducing the redundancy of the tab, further reducing a space occupied by the tab, and helping to improve the energy density of the battery.

In some examples, two electrode leading-out holes, two electrode connecting members, and two electrode terminals are provided respectively, and each electrode connecting member includes a tab.

A center distance between the two tabs is less than a center distance between the two terminal posts.

By adopting the above technical solution, in a case that the center distance between the terminal posts is small, the center distance of the tabs is less than the center distance between the tabs, and at the same time, the body is deviated, thus improving a staggering space of the tabs.

The electrode connecting member includes a tab and an adapter sheet, and the adapter sheet is respectively welded to the tab and the body.

The first extending portion extends towards a direction of getting away from a centerline of the shell, and the first welding mark is formed between the first extending portion and the adapter sheet.

By adopting the above technical solution, the first extending portion provides a larger welding area for the welding between the electrode terminal and the electrode connecting member, thus helping to improve the welding quality.

In some examples, a second welding mark is formed between the tab and the adapter sheet, and the second welding mark is arranged on a side of the first welding mark close to a central portion of the first wall.

By adopting the above technical solution, a laser welding area is staggered from an ultrasonic welding area through the adapter sheet, facilitating the arrangement of the tabs and making the staggering space of the tabs more sufficient.

In some examples, the first extending portion includes a first segment with a first thickness and a second segment with a second thickness, the first segment is arranged between the terminal post connecting portion and the second segment, and the first welding mark is located on the second segment. The second thickness is greater than or equal to the first thickness.

By adopting the above technical solution, the second segment can meet the requirement on a penetration depth of laser welding.

In some examples, a ratio of the second thickness to the first thickness is greater than or equal to and less than or equal to.

By adopting the above technical solution, the battery cell can consider the space and the structural strength below a sealing ring at the same time, thus making a sealing performance of the battery cell better.

In some examples, the adapter sheet has a third thickness, and a ratio of the second thickness to the third thickness is greater than or equal to and less than or equal to 3.

By adopting the above technical solution, the electrode terminal can meet the requirement on the penetration depth without occupying too much space inside the battery cell.

In some examples, the adapter sheet is step-shaped, and two ends of the adapter sheet are respectively connected to the first segment and the second segment.

By adopting the above technical solution, a shape of the adapter sheet is adapted to a shape of the electrode terminal, so as to meet the welding requirement.

In some examples, the first extending portion extends towards a direction of getting close to the centerline of the shell. The electrode connecting member is a tab, and the tab is at least welded to the first extending portion.

By adopting the above technical solution, the body leaves an avoidance space on a side close an edge of the shell, thus reducing the space occupied by the electrode terminal in an edge area of the battery cell. The space between the body and the edge of the shell can be used for conveniently arranging other components, such as pressure strips, thus also optimizing the arrangement space of the components in the battery cell.

In some examples, the tab includes multiple tab portions, the multiple tab portions are welded together to form a second welding mark, and a proj ection of the second welding mark towards the electrode terminal completely falls within the body.

By adopting the above technical solution, the tab and the body can be correspondingly arranged to facilitate welding and the laser welding joint can be prevented from directly pressing against the tab during laser welding, so as to avoid crushing or cracking of the tab.

In some examples, along the length direction of the first wall, the second welding mark is deviated inwards relative to the body, and a first distance exists between an inner side edge of the second welding mark and an inner side edge of the body;

along the width direction of the first wall, the second welding mark is deviated downwards relative to the body, and a second distance exists between a lower side edge of the second welding mark and a lower side edge of the body; and
at least one of the first distance and the second distance is greater than or equal to 1 mm.

By adopting the above technical solution, the second welding mark can completely fall within the range of the electrode terminal.

In some examples, a projection of the second welding mark on the body falls within the first welding mark;

along the width direction of the first wall, a third distance exists between an edge of the first welding mark and the edge of the second welding mark;
along the length direction of the first wall, a fourth distance exists between the edge of the first welding mark and the edge of the second welding mark; and
the third distance and the fourth distance are both greater than 0 and less than twice the width of the first welding mark.

By adopting the above technical solution, by adopting the above technical solution, a projection of the second welding mark on the electrode terminal falls within a projection of the first welding mark on the electrode terminal, thus improving the welding reliability between the tab and the body.

In some examples, a ratio of a thickness of the body to a thickness of the tab is greater than or equal to 3.

By adopting the above technical solution, the thickness of the body can be made greater than the penetration depth of laser welding, thus making it difficult to weld through the body during welding.

In some examples, a penetration depth of the first welding mark on the body is less than or equal to the thickness of the body.

By adopting the above technical solution, it is difficult to weld through the body during laser welding.

In some examples, the penetration depth of the first welding mark on the body is less than or equal to half of the thickness of the body.

By adopting the above technical solution, by adopting the above technical solution, an impact of welding heat on a compression amount of the sealing ring can be reduced.

In some examples, the first wall of the shell is further provided with an electrolyte filling hole and an explosion-proof valve mounting hole, and an electrolyte filling hole baffle for sealing the electrolyte filling hole and an explosion-proof valve passing through the explosion-proof valve mounting hole are mounted on the first wall, and the electrolyte filling hole and the explosion-proof valve are spaced apart from each other.

The electrode terminal has a first height on an inner surface of the first wall.

The electrolyte filling hole baffle has a second height on the inner surface of the first wall.

The first height is equal to or unequal to the second height.

By adopting the above technical solution, the adapter sheet is omitted, thus solving the problem that the adapter sheet needs to avoid the electrolyte filling hole baffle in the existing technology. The height of the electrolyte filling hole baffle and the body can be flexibly set.

In some examples, the second height is less than the first height.

By adopting the above technical solution, when the tab is welded to the body, the electrolyte filling hole baffle is less likely to interfere with the tab.

In some examples, the explosion-proof valve has a third height on the inner surface of the first wall.

The second height is greater than the first height, and a sum of the second height, the thickness of the tab, and a thickness of an adhesive tape attached to the tab is less than the third height.

By adopting the above technical solution, a probability that the tab is lifted by the electrolyte filling hole baffle and inserted into an electrode plate can be reduced.

In some examples, the first direction is the width direction of the first wall.

By adopting the above technical solution, the body is deviated relative to the terminal post in the width direction of the first wall, and one end of the body can provide a certain avoidance space for the components in the battery cell, thus optimizing the arrangement space of the components in the battery cell. Moreover, the body can be deviated towards a side where the electrode connecting member is located, thus facilitating the welding between the electrode connecting member and the body, reducing the redundancy and occupied space of the electrode connecting member, and helping to improve the energy density of the battery cell.

In some examples, the electrode connecting member includes a tab, the tab has a staggering space inside the battery cell, and a length of the staggering space is greater than or equal to 8 mm.

According to a second aspect, an example of the present application provides a battery, including the battery cell according to the first aspect.

According to a third aspect, an example of the present application provides a power consuming apparatus, including the battery according to the second aspect.

The above description only refers to an overview of the technical solution of the present application. In order to understand the technical means of the present application more clearly, it can be implemented according to the content of the description. In order to make the above-mentioned and other purposes, features and advantages of the present application more apparent, the specific embodiments of the present application are listed below.

BRIEF DESCRIPTION OF THE DRAWINGS

In order to describe the technical solutions in the examples of the present application more clearly, the following briefly introduces the drawings required for the description of the examples or conventional technologies. Clearly, the drawings described below are only some examples of the present application. Those of ordinary skill in the art may also obtain other drawings according to these drawings without contributing any inventive labor.

FIG. 1 is a schematic structural diagram of a vehicle according to some examples of the present application;

FIG. 2 is a schematic structural diagram of a battery according to some examples of the present application;

FIG. 3 is a schematic structural diagram of a battery cell according to some examples of the present application;

FIG. 4 is a bottom view of a first wall in the battery cell shown in FIG. 3;

FIG. 5 is a sectional view of the first wall shown in FIG. 4 along line A-A;

FIG. 6 is a partial schematic diagram of the first wall shown in FIG. 5;

FIG. 7 is a top view of the battery cell shown in FIG. 3;

FIG. 8 is a sectional view of the battery cell shown in FIG. 7 along line B-B;

FIG. 9 is a partial enlarged diagram of position C in the battery cell shown in FIG. 8;

FIG. 10 is a schematic structural diagram of a battery cell according to some other examples of the present application;

FIG. 11 is a top view of the battery cell shown in FIG. 10;

FIG. 12 is a sectional view of the battery cell shown in FIG. 11 along line D-D;

FIG. 13 is a bottom view of a first wall in the battery cell shown in FIG. 10;

FIG. 14 is a schematic diagram of a partial structure of the first wall shown in FIG. 13;

FIG. 15 is a sectional view of the first wall shown in FIG. 13 along line E-E; and

FIG. 16 is a partial schematic diagram of the sectional view shown in FIG. 15.

Description of reference numerals:

1000-vehicle; 100-battery; 200-controller; 300-motor; 10-box body; 11-first portion; 12-second portion; 20-battery cell; 21-shell; 211-first wall; 212-electrode leading-out hole; 213-electrolyte filling hole; 214-explosion-proof valve mounting hole; 22-electrode assembly; 221-electrode connecting member; 2211-tab; 2211a-tab staggering line; 2212-adapter sheet; 23-electrode terminal; 231-body; 231a-first side surface; 231b-second side surface; 2311-terminal post connecting portion; 2312-first extending portion; 2312a-first segment; 2312b-second segment; 2313-second extending portion; 232-terminal post; 233-riveting member; 24-electrolyte filling hole baffle; 25-explosion-proof valve; 31-first welding mark; and 32-second welding mark.

## DETAILED DESCRIPTION

The examples of the technical solutions of the present application will be described in detail below with reference to the drawings. The following examples are only used to describe the technical solutions of the present application more explicitly, and are thus only interpreted as examples, rather than used to limit the protection scope of the present application.

Unless otherwise defined, meanings of all technical and scientific terms used herein are the same as those usually understood by those skilled in the art to which the present application belongs. Terms used herein are merely intended to describe the specific examples, instead of limiting the present application. The terms "include", "comprise", and any variant thereof in the description and the claims of the present application and the description of the drawings are intended to cover a non-exclusive inclusion.

In the description of the examples of the present application, the technical terms "first", "second", and the like are only intended to distinguish different objects, and should not be understood as indicating or implying relative importance or implying the number, specific order or primary and secondary relationship of indicated technical features. In the description of the examples of the present application, "multiple" means two or more, unless otherwise expressly and specifically defined.

"Example" mentioned here means that particular features, structures, or characteristics described with reference to the example may be included in at least one example of the present application. The term appearing at different positions of the description may not necessarily refer to the same example or an independent or alternative example that is mutually exclusive with another example. A person skilled in the art explicitly or implicitly understands that the examples described in the specification may be combined with other examples.

In the description of the examples of the present application, the term "and/or" is merely an association to describe associated objects, and means that three relationships may be exist. For example, A and/or B may represent the following three cases: only A exists, both A and B exist, and only B exists. In addition, the character "/" in this specification generally indicates an "or" relationship between the associated objects.

In the descriptions of the examples of the present application, the term "multiple" refers to more than two (including two), and similarly, "multiple groups" refers to more than two groups (including two groups); and "multiple pieces" refers to more than two pieces (including two pieces).

In the description of the examples of the present application, the directions or positional relationships indicated by the technical terms such as "center", "longitudinal", "transverse", "length", "width", "thickness", "upper", "lower", "front", "rear", "vertical", "horizontal", "top", "bottom", "inside", and "outside" are based on those shown in the accompanying drawings and are only for the convenience of describing the examples of the present application and simplifying the description, rather than indicating or implying that the involved apparatus or component should have a specific orientation or should be configured or operated in the specific orientation, and thus cannot be understood as limitations on the examples of the present application.

In the description of the examples of the present application, unless otherwise explicitly specified or defined, the technical terms such as "mount", "connected", "connect", and "fix" should be understood in a broad sense. For example, it may be fixed connection, detachable connection, or integral connection; or it may be mechanical connection or electrical connection; or the connection may be a direct connection, an indirect connection through an intermediate medium, internal communication between two components, or an interaction relationship between two components. For those skilled in the art, the specific meanings of the above terms in the examples of the present application may be interpreted according to the specific situations.

A power battery generally includes a battery cell. The battery cell includes an electrode assembly, a shell body for accommodating the electrode assembly, and an end cover covering the shell body. The end cover is usually provided with two terminal posts and an electrolyte filling hole. The terminal posts are connected to tabs on the electrode assembly through adapter sheets.

As found through research, an arrangement space inside the battery cell is compact, causing the arrangement of components in the battery cell to be limited.

In order to solve the above problems, after in-depth research, a battery cell is designed, which includes a shell, an electrode assembly, and two electrode terminals. A first wall of the shell is provided with an electrode leading-out hole. The electrode assembly is arranged in the shell. The electrode assembly is provided with an electrode connecting member. Terminal posts are arranged on the first wall of the shell. Each electrode terminal includes a body and a terminal post protruding from one side of the body. The terminal post penetrates through the electrode leading-out hole. The body is arranged in the shell and electrically connected to the electrode connecting member. The body has a first side surface and a second side surface arranged opposite to each other along a first direction, and a distance between the first side surface and the terminal post is greater than a distance between the second side surface and the terminal post. Since the body of the electrode terminal is deviated relative to the electrode leading-out hole and the terminal post, one end of the body can be used for connecting the electrode connecting member, and the other end can provide a certain avoidance space, so as to optimize the arrangement space of the components in the battery cell.

The battery cell provided in this example of the present application can be used for a power consuming apparatus using a battery as a power supply. The power consuming apparatus may be, but not limited to, a mobile phone, a tablet, a laptop, an electric toy, a power tool, an electric scooter, an electric vehicle, a ship, a spacecraft, or the like. The electric toy may include a fixed or mobile electric toy, such as a game console, an electric car toy, an electric ship toy, an electric airplane toy, or the like. The spacecraft may include an airplane, a rocket, a space shuttle, a spacecraft, or the like.

For the convenience of description, the following examples will be described by taking a power consuming apparatus according to an example of the present application being a vehicle 1000 as an example.

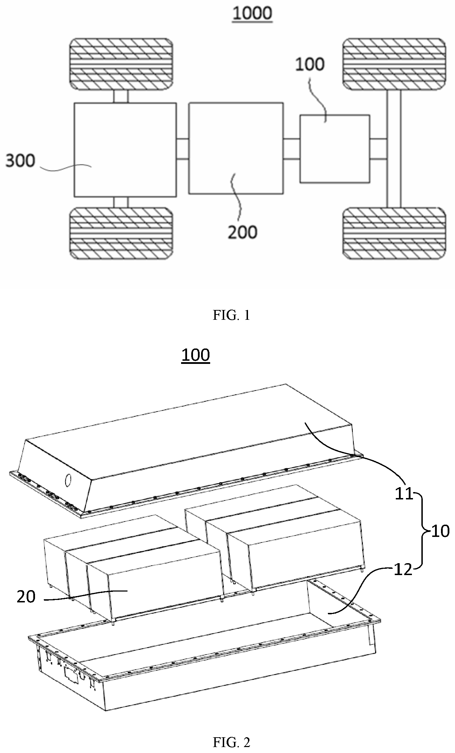

Referring to FIG. 1, FIG. 1 is a schematic structural diagram of a vehicle 1000 according to some examples of the present application. A vehicle 1000 may be a fuel-powered vehicle, a gas-powered vehicle, or a new energy vehicle. The new energy vehicle may be a pure electric vehicle, a hybrid electric vehicle, or an extended range vehicle, etc. The inside of the vehicle 1000 is provided with a battery 100. The battery 100 may be arranged at the bottom, head, or tail of the vehicle 1000. The battery 100 may be used for supplying power to the vehicle 1000. For example, the battery 100 may be used as a power supply for operating the vehicle 1000. The vehicle 1000 may further include a controller 200 and a motor 300. The controller 200 is used for controlling the battery 100 to supply power to the motor 300, for example, to meet working power requirements during starting, navigation, and traveling of the vehicle 1000.

In some examples of the present application, the battery 100 can not only serve as a power supply for operating the vehicle 1000, but can also serve as a power supply for driving the vehicle 1000, replacing or partially replacing fuel or natural gas, to provide driving power for the vehicle 1000.

Referring to FIG. 2, FIG. 2 is an exploded view of a battery 100 according to some examples of the present application. In some examples, the battery 100 includes a box body 10 and battery cells 20. The battery cells 20 are accommodated in the box body 10.

The box body 10 is used for providing an accommodating space for the battery cells. The box body 10 may adopt various structures. In some examples, the box body 10 may include a first portion 11 and a second portion 12, the first portion 11 and the second portion 12 overlap each other, and the first portion 11 and the second portion 12 jointly define the accommodating space for accommodating the battery cells. The second portion 12 may be a hollow structure with one end open. The first portion 11 may be a plate-shaped structure. The first portion 11 covers an open side of the second portion 12, so that the first portion 11 and the second portion 12 jointly define the accommodating space. Both the first portion 11 and the second portion 12 may also be hollow structures with one side open. An open side of the first portion 11 covers the open side of the second portion 12. Of course, the box body 10 formed by the first portion 11 and the second portion 12 may be in various shapes, such as cylindrical shape and cuboidal shape.

In the battery 100, multiple battery cells 20 may be provided. The multiple battery cells 20 may be connected in series, parallel, or series-parallel. Series-parallel connection refers to the multiple battery cells 20 being connected in both series and parallel. The multiple battery cells 20 may be directly connected together in series, parallel, or series-parallel, and then the whole composed of the multiple battery cells 20 is accommodated in the box body 10. Of course, the battery 100 may also be composed of multiple battery cells 20 connected in series, parallel, or series-parallel to form a battery module firstly, and then multiple battery modules are connected in series, parallel, or series-parallel to form a whole, which is accommodated in the box body 10. The battery 100 may further include other structures. For example, the battery 100 may further include a busbar component for achieving electrical connection between the multiple battery cells 20.

Each battery cell 20 may be a secondary battery or a primary battery. It may also be, but not limited to, a lithium sulfur battery, a sodium ion battery, or a magnesium ion battery. The battery cell 20 may be in a cylindrical shape, a flat body shape, a cuboidal shape, or any other shape.

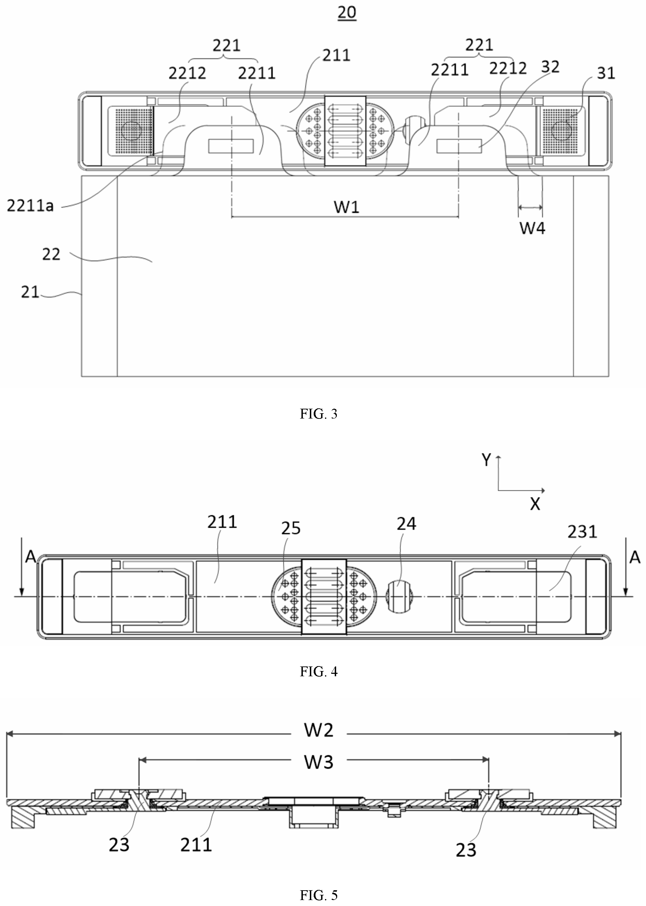

According to a first aspect, an example of the present application provides a battery cell 20. Referring to FIG. 3 to FIG. 6, the battery cell 20 includes a shell 21, an electrode assembly 22, and electrode terminals 23. A first wall 211 of the shell 21 is provided with electrode leading-out holes 212. The electrode assembly 22 is arranged in the shell 21. The electrode assembly 22 is provided with electrode connecting members 221. Terminal posts 232 are arranged on the first wall 211 of the shell 21. Each electrode terminal 23 includes a body 231 and a terminal post 232 protruding from one side of the body 231. The terminal post 232 penetrates through the electrode leading-out hole 212. The body 231 is arranged in the shell 21 and electrically connected to the electrode connecting member 221. The body 231 has a first side surface 231a and a second side surface 231b arranged opposite to each other along a first direction. A distance between the first side surface 231a and the terminal post 232 is greater than a distance between the second side surface 231b and the terminal post 232.

The shell 21 is a component used for forming an internal environment of the battery cell 20. The internal environment formed by the shell 21 may be used for accommodating the electrode assembly 22, electrolyte, and other components. The shell 21 may include a shell body with one end open and an end cover covering the shell body, or it may be an integrally formed structure. The shell 21 may have various shapes and sizes, such as a cuboidal shape, a cylindrical shape, and a hexagonal prism shape. Specifically, the shape of the shell 21 may be determined according to the specific shape and size of the electrode assembly 22. The shell 21 may be made of various materials, such as copper, iron, aluminum, stainless steel, aluminum alloy, or plastic. The first wall 211 of the shell 21 is provided with electrode leading-out holes 212. The first wall 211 with the electrode leading-out holes 212 may be provided on the side, top, or bottom of the shell 21. The electrode leading-out holes 212 are used for mounting the terminal posts 232. The electrode leading-out holes 212 may be circular through holes or other shaped through holes.

The electrode assembly 22 is a component where electrochemical reactions occur in the battery cell 20. The shell 21 may contain one or more electrode assemblies 22. The electrode assembly 22 is mainly formed by winding or stacking a positive electrode plate and a negative electrode plate. Usually, a separator is provided between the positive electrode plate and the negative electrode plate. The portions of the positive electrode plate and the negative electrode plate with active materials form a main body portion of the electrode assembly 22, while the portions of the positive electrode plate and the negative electrode plate without active materials respectively form tabs 2211.

In this example of the present application, the electrode connecting member 221 includes at least one tab 2211. In some examples, the electrode connecting member 221 may further include other components electrically connected between the tab 2211 and the electrode terminal 23. For example, the electrode connecting member 221 includes the tab 2211 and an adapter sheet 2212. The adapter sheet 2212 is respectively welded to the tab 2211 and the electrode terminal 23. In charging and discharging processes of the battery, a positive active material and a negative active material react with the electrolyte, and the electrode connecting members 221 are connected to the electrode terminals 23 to form a current loop.

Each electrode terminal 23 includes a body 231 and a terminal post 232 protruding from one side of the body 231. The terminal post 232 may be integrated with the body 231, or the terminal post 232 may be separated from and fixedly connected to the body 231. The terminal post 232 is inserted into the electrode leading-out hole 212. The terminal post 232 is used for being electrically connected to external power consuming components. The body 231 is arranged in the shell 21 and welded to the electrode connecting member 221. The body 231 is used for being electrically connected to the electrode connecting member 221. Optionally, the terminal post 232 may be, but not limited, in a cylindrical shape, and the body 231 may be, but not limited to, in a flat plate shape. For example, the body 231 is in a rectangular flat plate shape. Each electrode terminal 23 may further include a riveting member 233 arranged on an outer side of the shell 21. The riveting member 233 is connected to the terminal post 232.

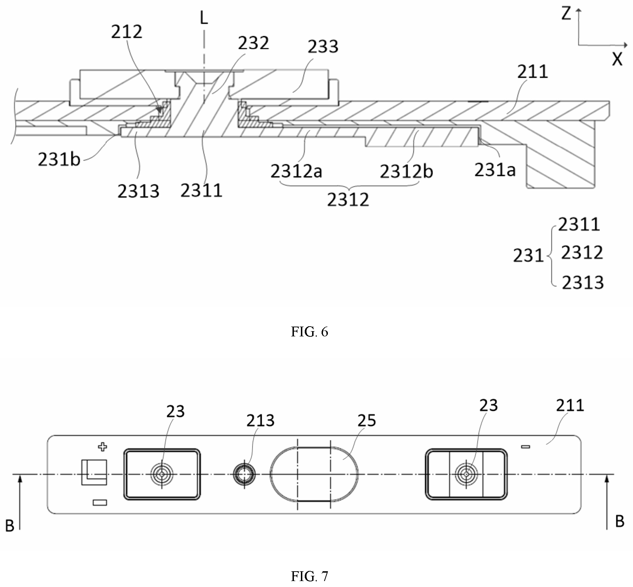

In this example of the present application, the electrode terminal 23 may be a negative electrode terminal or a positive electrode terminal. Along the first direction, the distance from the opposite ends of the body 231 to a centerline (L line in FIG. 6) of the electrode leading-out hole 212 is unequal. The first direction may be a length direction (X direction) of the first wall 211 or a width direction (Y direction) of the first wall 211, or any other direction that forms an included angle with the length direction and width direction of the first wall 211. The body 231 has a first side surface 231a and a second side surface 231b arranged opposite to each other along the first direction. The distance between the first side surface 231a and the second side surface 231b and the centerline of the electrode leading-out hole 212 is unequal, and the distance between the first side surface 231a and the terminal post 232 is greater than the distance between the second side surface 231b and the terminal post 232. The distance between the first side surface 231a and the terminal post 232 refers to the minimum distance between the first side surface 231a and the terminal post 232. The distance between the second side surface 231b and the terminal post 232 refers to the minimum distance between the second side surface 231b and the terminal post 232. The first side surface 231a and the second side surface 231b may be regular flat surfaces or irregular flat surfaces. In a case that the terminal post 232 is cylindrical, the minimum distance between the first side surface 231a and the terminal post 232 is the minimum distance between the first side surface 231a and a cylindrical outer surface of the terminal post 232, and the minimum distance between the second side surface 231b and the terminal post 232 refers to the minimum distance between the second side surface 231b and the cylindrical outer surface of the terminal post 232.

As shown in FIG. 5 and FIG. 6, in some examples, the distance between the first side surface 231a of the body 231 close to an edge of the first wall 211 and the terminal post 232 is greater than the distance between the second side surface 231b of the body 231 close to a central portion of the first wall 211 and the terminal post 232, that is, the body 231 is deviated towards the outer side of the shell 21 relative to the electrode leading-out hole 212 and the terminal post 232. In this example, the body 231 is approximately in a rectangular shape. It can be understood that in a case that both the body 231 and the terminal post 232 are circular, then a circle center of the body 231 is deviated relative to a circle center of the terminal post 232.

In this example, since the body 231 is deviated towards the outer side of the shell 21 relative to the electrode leading-out hole 212, the space occupied by the electrode terminal 23 in a central area of the battery cell 20 is reduced, helping the electrode terminal 23 to avoid other components in the battery cell 20, such as the electrolyte filling hole 213. In addition, the pre-welding area of the tabs 2211 may be close to a central portion of the shell 21, and there is a large space for the staggered arrangement of the tab 2211, thus facilitating the arrangement of the tab 2211. At the same time, a welding area between the electrode connecting member 221 and the body 231 may be close to the outer side of the shell 21, thus increasing the welding space between the electrode connecting member 221 and the body 231, and optimizing the arrangement space of the components in the battery cell 20.

In some other examples, the body 231 is deviated towards an inner side of the shell 21 relative to the electrode leading-out hole 212 and the terminal post 232, thus reducing the space occupied by the electrode terminal 23 in the edge area of the battery cell 20. The space between the body 231 and the edge of the shell 21 can be used for conveniently arranging other components, such as pressure strips, thus also optimizing the arrangement space of the components in the battery cell 20.

In yet some examples, the electrode connecting member 221 may only include the tab 2211, that is, the adapter sheet 2212 is omitted. At this time, the body 231 is deviated towards the outer side or inner side of the shell 21, thus also providing a flexible mounting space for the battery cell 20.

The battery cell 20 provided in this example of the present application includes a shell 21, an electrode assembly 22, and electrode terminals 23. The first wall 211 of the shell 21 is provided with electrode leading-out holes 212. The electrode assembly 22 is provided with electrode connecting members 221. Since the body 231 of the electrode terminal 23 is deviated relative to the centerline of the electrode leading-out hole 212 and the terminal post 232, that is, the centerline of the body 231 is deviated from the centerline of the electrode leading-out hole 212 and the centerline of the terminal post 232, one end of the body 231 can be used for connecting the electrode connecting member 221, and the other end can provide a certain avoidance space for the components in the battery cell 20, so as to optimize the arrangement space of the components in the battery cell 20. Moreover, since the electrode terminal 23 is an eccentric structure, the electrode terminal 23 itself has a high torsional strength, thus improving the overall strength of the battery cell 20.

Referring to FIG. 3 to FIG. 6, in some examples, the body 231 includes a terminal post connecting portion 2311 and a first extending portion 2312, the projections of the terminal post connecting portion 2311 and the terminal post 232 on the first wall 211 coincide, the first extending portion 2312 extends from the terminal post connecting portion 2311 along a first direction, and the first direction is the length direction or width direction of the first wall 211. A first welding mark 31 (as shown in FIG. 3) is formed between the body 231 and the electrode connecting member 221. The first welding mark 31 is at least partially located on the first extending portion 2312.

The terminal post connecting portion 2311 and the first extending portion 2312 are an integral structure. The projections of the terminal post connecting portion 2311 and the terminal post 232 on the first wall 211 coincide, that is, the terminal post connecting portion 2311 and the terminal post 232 are correspondingly arranged in a thickness direction of the first wall 211. A distance from an edge of the first extending portion 2312 to the centerline of the electrode leading-out hole 212 is greater than a distance from an end of the body 231 opposite to the first extending portion 2312 to the centerline of the electrode leading-out hole 212.

In this example, the first direction is the length direction (X direction) of the first wall 211, and the first extending portion 2312 extends from the terminal post connecting portion 2311 towards the edge of the first wall 211, that is, the body 231 is deviated towards the outer side of the shell 21 relative to the terminal post 232. In other examples, the first extending portion 2312 may also extend from the terminal post connecting portion 2311 towards the center of the first wall 211. Optionally, the body 231 further includes a second extending portion 2313, and the second extending portion 2313 and the first extending portion 2312 are respectively arranged on two opposite sides of the terminal post connecting portion 2311. In another example, the first direction may also be the width direction of the first wall 211, and the first extending portion 2312 extends from the terminal post connecting portion 2311 towards the edge of the width direction of the first wall 211, that is, the body 231 is deviated relative to the terminal post 232 in the width direction of the first wall 211. The body 231 and the electrode connecting member 221 are welded to achieve electrical connection. Welding the body 231 and the electrode connecting member 221 together will form a first welding mark 31 between the body 231 and the electrode connecting member 221. Optionally, the body 231 and the electrode connecting member 221 may be welded through laser, and the first welding mark 31 is a laser welding mark. The first welding mark 31 is at least partially located in the first extending portion 2312, that is, the first welding mark 31 can completely fall within the first extending portion 2312, or partially fall within the first extending portion 2312, and partially fall within the terminal post connecting portion 2311. By adopting the above technical solution, the body 231 is deviated relative to the terminal post 232, the first welding mark 31 between the body 231 and the electrode connecting member 221 is at least partially located within the first extending portion 2312, and the first extending portion 2312 can serve as a welding area between the electrode terminal 23 and the electrode connecting member 221. On the basis of optimizing the component layout space, the electrode terminal 23 can meet the welding area requirement.

Two electrode leading-out holes 212, two electrode connecting members 221, and two electrode terminals 23 are provided respectively. Each electrode connecting member 221 includes a tab 2211. In some examples, a center distance W1 between the two tabs 2211 is less than a center distance W3 between the two terminal posts 232.

FIG. 5 further shows a length W2 of the first wall 211. It can be understood that the center distance W1 between the two tabs 2211 and the center distance W3 between the two terminal posts 232 are both less than the length W2 of the first wall 211.

The two tabs 2211 are respectively a negative tab and a positive tab. The center distance W1 between the two tabs 2211 is a distance between the centers of the two tabs 2211. The center distance W1 between the two tabs 2211 is small. Optionally, the center distance W1 between the two tabs 2211 may be less than or equal to 130 mm.

Taking the examples shown in FIG. 3 to FIG. 9 as an example, since the center distance between the tabs 2211 is small, the electrode connecting member 221 further includes an adapter sheet 2212 in addition to the tab 2211. In this way, the adapter sheet 2212 and the tab 2211 are welded together to form a second welding mark 32. The adapter sheet 2212 and the body 231 are welded together to form a first welding mark 31. The body 231 is deviated towards the outer side of the shell 21. The second welding mark 32 is closer to the central portion of the shell 21 than the first welding mark 31, so as to facilitate the arrangement of the tabs 2211 in a central portion of the battery cell 20 and provide a larger staggering space for the tabs 2211.

By adopting the above technical solution, in a case that the center distance between the terminal posts 232 is small, the center distance between the tabs 2211 is less than the center distance between the terminal posts 232, and the tabs 2211 have a larger arrangement space at the central portion of the battery cell 20. Moreover, since the body 231 is deviated, it helps to obtain sufficient welding area.

In some examples, the electrode connecting member 221 further includes an adapter sheet 2212, and the adapter sheet 2212 is respectively welded to the tab 2211 and the body 231. The first extending portion 2312 extends towards a direction of getting away from the centerline of the shell 21. The first welding mark 31 is formed between the first extending portion 2312 and the adapter sheet 2212.

The first extending portion 2312 is deviated towards the outer side of the shell 21. The first welding mark 31 is formed between the first extending portion 2312 and the adapter sheet 2212. In this way, the first extending portion 2312 provides a larger welding area for the welding between the electrode terminal 23 and the electrode connecting member 221, thus helping to improve the welding quality.

In some examples, the first direction is the length direction of the first wall 211, that is, the first side surface 231a and the second side surface 231b are arranged opposite to each other along the length direction of the first wall 211. A second welding mark 32 is formed between the tab 2211 and the adapter sheet 2212. The second welding mark 32 is arranged on a side of the first welding mark 31 close to the central portion of the first wall 211.

The tab 2211 and the adapter sheet 2212 may be welded through ultrasonic waves, that is, the second welding mark 32 is an ultrasonic welding mark. The first welding mark 31 and the second welding mark 32 are spaced apart from each other, that is, the first welding mark 31 and the second welding mark 32 are staggered from each other. Not only does a large laser welding area exist between the adapter sheet 2212 and the electrode terminal 23, but also a large ultrasonic welding area exists between the adapter sheet 2212 and the tab 2211. Moreover, the second welding mark 32 is arranged on the side of the first welding mark 31 close to the central portion of the first wall 211, so that the pre-welding area of the tab 2211 is closer to the central portion of the battery cell 20, thus helping to improve the stagged arrangement space of the tab 2211. FIG. 3 shows a tab staggering line 2211a. From FIG. 3, it can be seen that the tab 2211 of the battery cell 20 includes tab portions on multiple electrode plates, and the multiple tab portions may be staggered at the central portion of the battery cell 20. Optionally, the multiple tab portions are staggered between the first welding mark 31 and an explosion-proof valve 25.

By adopting the above technical solution, the electrode terminal 23 is eccentric towards the outer side and the laser welding area is staggered from the ultrasonic welding area through the adapter sheet 2212, facilitating the arrangement of the tabs 2211 and making the staggered arrangement space of the tabs 2211 more sufficient.

Referring to FIG. 6, FIG. 8, and FIG. 9, in some examples, the first extending portion 2312 includes a first segment 2312a with a first thickness H1 and a second segment 2312b with a second thickness H2, the first segment 2312a is arranged between the terminal post connecting portion 2311 and the second segment 2312b, the first welding mark 31 is located in the second segment 2312b, and the second thickness H2 is greater than or equal to the first thickness H1.

In a case that the second thickness H2 is greater than the first thickness H1, the first extending portion 2312 adopts a non-uniform-thickness structure. Optionally, the first segment 2312a is in flush with a side of the second segment 2312b close to the first wall 211, so that the first extending portion 2312 is step-shaped, and the second segment 2312b protrudes towards a direction of getting away from the first wall 211 relative to the first segment 2312a. In another example, the second thickness H2 may also be equal to the first thickness H1.

The laser welding area between the electrode terminal 23 and the adapter sheet 2212 is at least located at the second segment 2312b. By configuring a thickness of the second segment 2312b to be greater than or equal to a thickness of the first segment 2312a, the second segment 2312b can meet the requirement on a penetration depth of laser welding.

In some examples, a ratio of the second thickness H2 to the first thickness H1 is greater than or equal to 1 and less than or equal to 3, that is, 1≤H2/H1≤3.

The shell 21 of the battery cell 20 may include a shell body and an end cover. The first wall 211 where the electrode terminals 23 are mounted is the end cover. When the battery cell 20 is assembled, the end cover is arranged on the shell body, and a sealing ring is provided between the end cover and the shell body. In a case that the ratio of the second thickness H2 to the first thickness H1 is less than 1, it will cause insufficient penetration depth of laser welding. In a case that the ratio of the second thickness H2 to the first thickness H1 is greater than 3, it may cause the second segment 2312b to occupy too much space and a sealing effect of the sealing ring to be poor.

By adopting the above technical solution, the battery cell 20 can consider the space and the structural strength below the sealing ring, thus making the sealing performance of the battery cell 20 better.

In some examples, the adapter sheet 2212 has a third thickness H3, and a ratio of the second thickness H2 to the third thickness is greater than or equal to 1 and less than or equal to 3, that is, 1≤H2/H3≤3.

The thickness of the second segment 2312b may be greater than or equal to a thickness of the adapter sheet 2212, the thickness of the adapter sheet 2212 does not need to be too large to avoid occupying too much space, and the thickness of the second segment 2312b needs to meet the requirement on the penetration depth of welding. In a case that the ratio of the second thickness H2 to the third thickness H3 is greater than 3, it may cause the second segment 2312b to occupy too much space.

By adopting the above technical solution, the electrode terminal 23 can meet the requirement on the penetration depth without occupying too much space inside the battery cell 20.

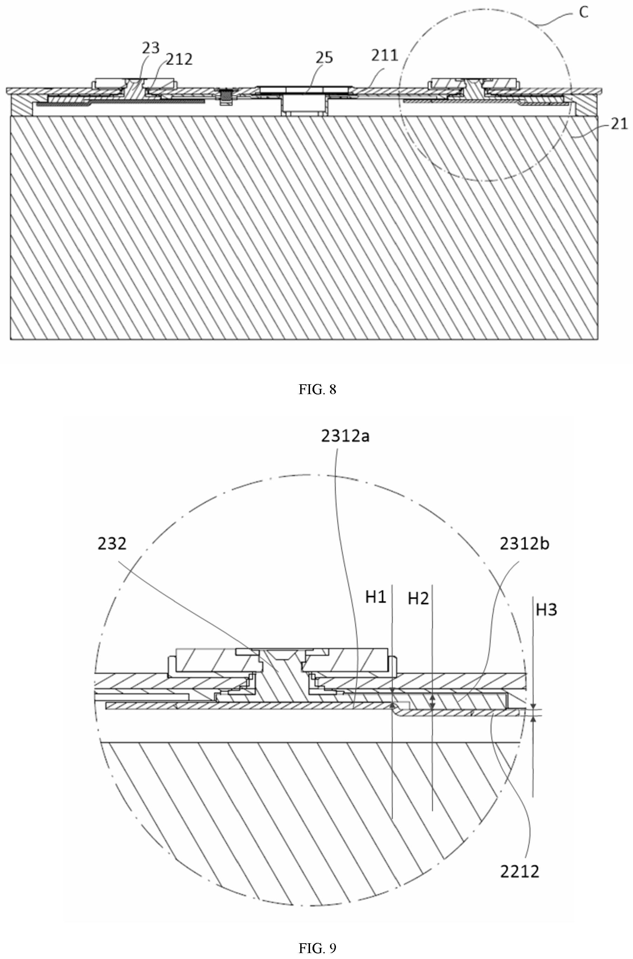

As shown in FIG. 9, the adapter sheet 2212 is step-shaped, and the adapter sheet 2212 is connected to both the first segment 2312a and the second segment 2312b.

The adapter sheet 2212 is a step-shaped sheet structure. One end of the adapter sheet 2212 is attached to the second segment 2312b, and the other end is attached to the first segment 2312a and the tab 2211 (not shown in FIG. 9).

By adopting the above technical solution, the shape of the adapter sheet 2212 is adapted to the shape of the electrode terminal 23, so as to meet the welding requirement.

Referring to FIG. 3 to FIG. 9, in some examples, the battery cell 20 includes a shell 21, an electrode assembly 22, and electrode terminals 23, the electrode assembly 22 is provided with electrode connecting members 221, and each electrode connecting member 221 includes a tab 2211 and an adapter sheet 2212. Each electrode terminal 23 includes a body 231 and a terminal post 232 protruding from one side of the body 231. The terminal post 232 penetrates through the electrode leading-out hole 212. The body 231 has a first side surface 231a and a second side surface 231b arranged opposite to each other along the length direction of the first wall 211. The first side surface 231a is close to the outer side of the shell 21. The second side surface 231b is close to the central portion of the shell 21. The distance between the first side surface 231a and the terminal post 232 is greater than the distance between the second side surface 231b and the terminal post 232. The center distance W1 between the two tabs 2211 is less than the center distance W3 between the two terminal posts 232. The adapter sheet 2212 is pre-welded to the tab 2211 to form a second welding mark 32. The adapter sheet 2212 is welded to the body 231 to form a first welding mark 31. The second welding mark 32 is closer to the central portion of the shell 21 than the first welding mark 31. The battery cell 20 provided in this example provides a large staggering space for the tabs 2211 and optimizes the arrangement space of the battery cell 20.

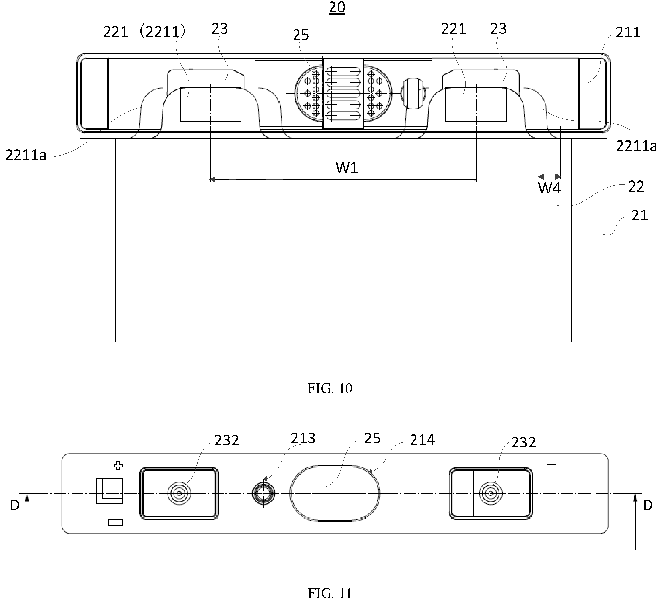

Referring to FIG. 10 to FIG. 12, some other examples of the present application provide a battery cell 20, which includes a shell 21, an electrode assembly 22, and electrode terminals 23. A first wall 211 of the shell 21 is provided with electrode leading-out holes 212. The electrode assembly 22 is arranged in the shell 21. The electrode assembly 22 is provided with electrode connecting members 221. Terminal posts 232 are arranged on the first wall 211 of the shell 21. Each electrode terminal 23 includes a body 231 and a terminal post 232 protruding from one side of the body 231. The terminal post 232 penetrates through the electrode leading-out hole 212. The body 231 is arranged in the shell 21 and electrically connected to the electrode connecting member 221. The body 231 has a first side surface 231a and a second side surface 231b arranged opposite to each other along a first direction. The distance between the first side surface 231a and the terminal post 232 is greater than the distance between the second side surface 231b and the terminal post 232. In this example, the first side surface 231a is a side surface of the body 231 close to the central portion of the shell 21, and the second side surface 231b is a side surface of the body 231 close to the edge of the shell 21, that is, the body 231 is deviated towards the inner side of the shell 21 relative to the terminal post 232.

In some examples, as shown in FIG. 10 to FIG. 12, the first direction is the length direction of the first wall 211. In some other examples, the first direction may also be the width direction of the first wall 211.

By adopting the above technical solution, the body 231 leaves an avoidance space on the side close to the edge of the shell 21, thus reducing the space occupied by the electrode terminal 23 in the edge area of the battery cell 20. The space between the body 231 and the edge of the shell 21 can be used for conveniently arranging other components, such as pressure strips, thus also optimizing the arrangement space of the components in the battery cell 20.

Referring to FIG. 11, FIG. 13, and FIG. 14, in some examples, the body 231 has a third side surface 231c and a fourth side surface 231d arranged opposite to each other along a second direction, and the second direction is the width direction (Y direction) of the first wall 211. The distance between the third side surface 231c and the terminal post 232 is greater than the distance between the fourth side surface 231d and the terminal post 232.

The center of the terminal post 232 may be located on the centerline of the first wall 211 in the width direction. The distance between the third side surface 231c and the terminal post 232 is greater than the distance between the fourth side surface 231d and the terminal post 232, that is, the distance between the third side surface 231c and the centerline of the first wall 211 in the width direction is greater than the distance between the fourth side surface 231d and the centerline of the first wall 211 in the width direction. In this way, the body 231 is deviated relative to the terminal post 232 along the width direction of the first wall 211, and the welding mark between the tab 2211 and the body 231 can also be deviated relative to the centerline of the first wall 211 in the width direction, thus facilitating the contact and welding between the tab 2211 and the body 231.

By adopting the above technical solution, the body 231 is deviated relative to the terminal post 232 along the length direction of the first wall 211, and at the same time, the body 231 is also deviated relative to the terminal post 232 along the width direction of the first wall 211, thus facilitating the welding of the tab 2211 to the electrode terminal 23, reducing the redundancy of the tab 2211, further reducing the space occupied by the tab 2211, and helping to improve the energy density of the battery.

Referring to FIG. 10 to FIG. 16, in some examples, the body 231 includes a terminal post connecting portion 2311 and a first extending portion 2312, the terminal post connecting portion 2311 and the terminal post 232 are correspondingly arranged along the thickness direction (Z direction) of the first wall 211, the first extending portion 2312 extends from the terminal post connecting portion 2311 along the first direction towards the central portion of the shell 21, and the first side surface 231a is provided on the first extending portion 2312. The electrode connecting member 221 is the tab 2211. The first extending portion 2312 extends towards a direction of getting close to the centerline of the shell 21. The first extending portion 2312 and the tab 2211 are welded together to form a first welding mark 31.

The solution provided in this example omits the adapter sheet 2212 and directly welds and fixes the electrode terminal 23 to the tab 2211. Specifically, the first extending portion 2312 in the electrode terminal 23 and the tab 2211 are fixedly welded together to form a first welding mark 31. The first welding mark 31 may be a laser welding mark.

The center distance W1 between the two tabs 2211 is less than the center distance W3 between the two terminal posts 232. Since the first extending portion 2312 extends towards the centerline of the shell 21, that is, towards the central portion of the shell 21, it is convenient to directly weld the tab 2211 to the first extending portion 2312, and the tab 2211 can obtain a larger staggered arrangement space, thus facilitating the arrangement of the tab 2211.

Referring to FIG. 10, FIG. 13, and FIG. 14, in some examples, the tab 2211 includes multiple stacked tab portions, the multiple tab portions are welded together to form a second welding mark 32, and the projection of the second welding mark 32 towards the electrode terminal 23 completely falls within the body 231.

Specifically, the multiple tab portions are pre-welded through ultrasonic welding, and then the pre-welded tab 2211 is welded to the body 231 through laser welding to form a second welding mark 32. The projection of the second welding mark 32 towards the electrode terminal 23 completely falls within the body 231, that is, along the length direction (X direction) of the first wall 211, the distance between the second welding mark 32 and the edge of the body 231 is greater than or equal to 0 mm, and along the width direction (Y direction) of the first wall 211, the distance between the second welding mark 32 and the edge of the body 231 is greater than or equal to 0 mm. The width direction of the first wall 211.

By adopting the above technical solution, the tab 2211 and the first body 231 can be correspondingly arranged to facilitate the welding, and the laser welding joint can be prevented from directly pressing against the tab 2211 during laser welding, so as to avoid crushing or cracking of the tab 2211.

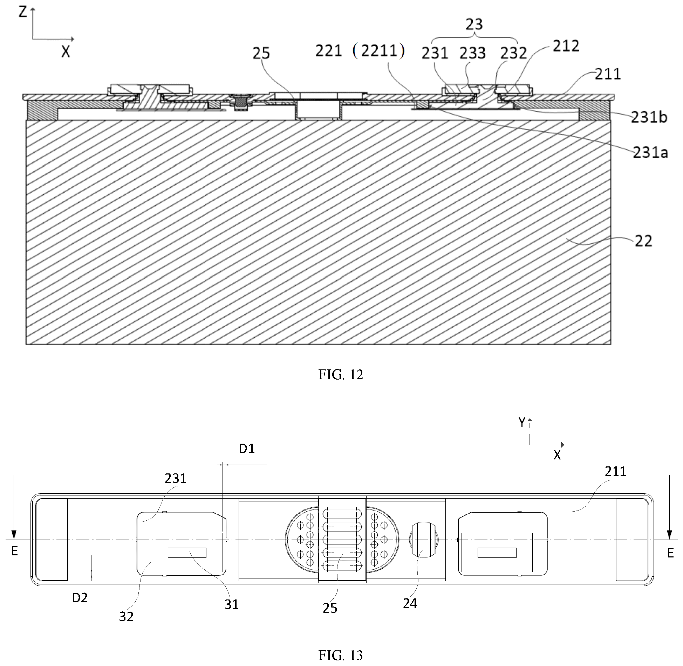

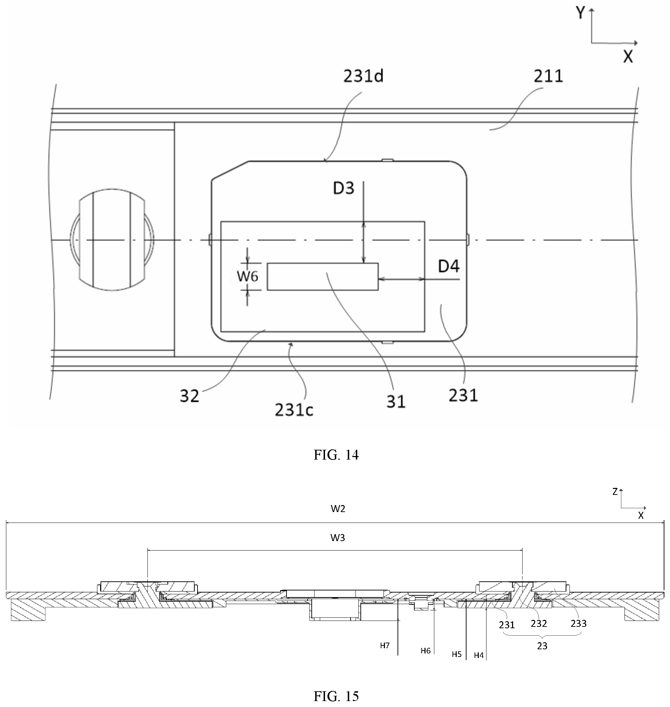

Referring to FIG. 13 and FIG. 14, in some examples, in some examples, the first direction is the length direction of the first wall 211. Along the length direction of the first wall 211, the second welding mark 32 is deviated inwards relative to the body 231, that is, the second welding mark 32 is deviated towards a direction of getting close to a center of the first wall 211 in the length direction. The distance between an inner side edge of the second welding mark 32 and an inner side edge of the body 231 is a first distance D1, and D1 is greater than or equal to 1 mm. Along the width direction of the first wall 211, the second welding mark 32 is deviated downwards relative to the body 231, that is, the second welding mark 32 is deviated towards a direction of getting away from the center of the first wall 211 in the width direction. The distance between a lower side edge of the second welding mark 32 and a lower side edge of the body 231 is a second distance D2, and D2 is greater than or equal to 1 mm.

The edge of the second welding mark 32 may be a straight line, a curved line, an arc line, etc. Along the length direction of the first wall 211, the distance between the inner side edge of the second welding mark 32 and the corresponding edge of the terminal post 232 may be greater than or equal to 1 mm. At the same time, along the width direction of the first wall 211, the distance between the lower side edge of the second welding mark 32 and the corresponding edge of the terminal post 232 may be greater than or equal to 1 mm.

Optionally, both the first distance D1 and the second distance D2 are less than 2 mm. The larger the first distance D1, the further away the tab 2211, thus leaving less space for staggering the tab 2211. The larger the second distance D2, the larger the height of the tab 2211. Increasing the height of the tab 2211 will increase the cost.

By adopting the above technical solution, the tab 2211 can be staggered in the battery cell 20, and the second welding mark 32 completely falls within the range of the electrode terminal 23, thus improving the welding quality.

Referring to FIG. 14, in some examples, the first direction is the length direction of the first wall 211, The projection of the first welding mark 31 on the body 231 falls within the projection of the second welding mark 32 on the body 231; Along the width direction of the first wall 211, a third distance D3 exists between the opposite edges of the first welding mark 31 and the second welding mark 32. Along the length direction of the first wall 211, a fourth distance D4 exists between the opposite edges of the first welding mark 31 and the second welding mark 32. The third distance D3 and the fourth distance D4 are both greater than 0 and less than twice the width W6 of the first welding mark 31.

Specifically, along the width direction (Y direction) of the first wall 211, a third distance D3 exists between the opposite edges of the first welding mark 31 and the second welding mark 32; and along the length direction (X direction) of the first wall 211, a fourth distance D4 exists between the opposite edges of the first welding mark 31 and the second welding mark 32, where $0 < D3 \leq 2W6$, and $0 < D4 \leq 2W6$.

By adopting the above technical solution, the projection of the first welding mark 31 on the electrode terminal 23 falls within the projection of the second welding mark 32 on the electrode terminal 23, thus improving the welding reliability between the tab 2211 and the body 231.

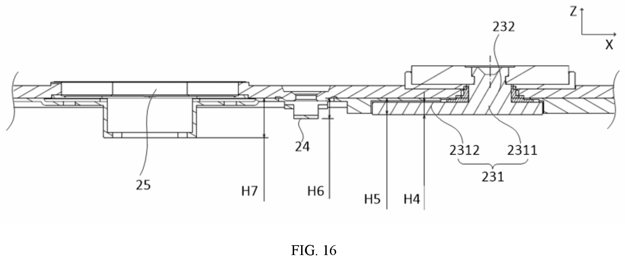

Referring to FIG. 15 and FIG. 16, in some examples, the ratio of the thickness H4 of the body 231 to the thickness of the tab 2211 is greater than or equal to 3.

After laser welding is performed on the tab 2211, it is necessary to continue laser welding the tab 2211 to the body 231. The ratio of the thickness of the body 231 to the thickness of the tab 2211 is greater than or equal to 3, thus making the thickness of the first body 231 greater than the penetration depth of laser welding, and preventing the body 231 from being welded through during welding. Optionally, the thickness of the body 231 may be, but not limited to, 2 mm. In a case that the thickness of the body 231 is too large, it will occupy the internal space of the battery cell 20.

In some examples, the penetration depth of the first welding mark 31 on the body 231 is less than or equal to the thickness of the body 231.

The penetration depth of the first welding mark 31 on the body 231 is less than or equal to the thickness H4 of the body 231, thus making it difficult to weld through the body 231 during laser welding.

In some examples, the penetration depth of the first welding mark 31 on the body 231 is less than or equal to half of the thickness H4 of the body 231. By adopting the above technical solution, an impact of welding heat on a compression of the sealing ring can be reduced.

In some examples, the first wall 211 of the shell 21 is further provided with an electrolyte filling hole 213 and an explosion-proof valve mounting hole 214, and an electrolyte filling hole baffle 24 for sealing the electrolyte filling hole 213 and an explosion-proof valve 25 passing through the explosion-proof valve mounting hole 214 are mounted on the first wall 211. The electrolyte filling hole 213 and the explosion-proof valve 25 are spaced apart from each other between the two electrode leading-out holes 212. The body 231 has a first height H5 on an inner surface of the first wall 211, and the electrolyte filling hole baffle 24 has a second height H6 on the inner surface of the first wall 211. The first height H5 is equal to or unequal to the second height H6.

Optionally, the first height H5 and the second height H6 are equal, that is, the body 231 and the electrolyte filling hole baffle 24 are arranged at the same height on the first wall 211, and the electrolyte filling hole baffle 24 will not press against the tab 2211. Optionally, the first height H5 and the second height H6 may also be unequal. For example, the first height H5 is greater than the second height H6, or the first height H5 is less than the second height H6.

By adopting the above technical solution, the adapter sheet in the battery cell 20 is omitted, thus solving the problem that the adapter sheet needs to avoid the electrolyte filling hole baffle 24 in the existing technology. The height of the electrolyte filling hole baffle 24 and the body 231 can be flexibly set.

In some examples, the second height H6 is less than the first height H5.

Specifically, a height of the electrolyte filling hole baffle 24 on the inner surface of the first wall 211 is less than a height of the body 231 on the inner surface of the first wall 211. When the tab 2211 is welded to the body 231, the electrolyte filling hole baffle 24 is less likely to interfere with the tab 2211.

In some examples, the explosion-proof valve 25 has a third height H7 on the inner surface of the first wall 211. The second height H6 is greater than the first height H5, and a sum of the second height H6, the thickness of the tab 2211, and A thickness of an adhesive tape attached to the tab 2211 is less than the third height H7.

Specifically, the thickness of the tab 2211 is set as H8, and the thickness of the adhesive tape attached to the tab 2211 is usually 0.15 mm. The height of the electrolyte filling hole baffle 24 on the inner surface of the first wall 211 is greater than the height of the body 231 on the inner surface of the first wall 211. At this time, it is required to satisfy the following condition:

$$H6+H8+0.15<H7.$$

It can be understood that a thickness of the adhesive paper can be adjusted, so the above condition can be adjusted accordingly.

By adopting the above technical solution, the height of the electrolyte filling hole baffle 24 on the inner surface of the first wall 211 may be greater than the height of the body 231 on the inner surface of the first wall 211. By satisfying the above condition, a probability that the tab 2211 is lifted by the electrolyte filling hole baffle 24 and inserted into the electrode plate can be reduced.

Referring to FIG. 3 and FIG. 10, in some examples, the tab 2211 has a certain staggering space in the battery cell 20, and the length W4 of the staggering space is greater than or equal to 8 mm.

The tab 2211 includes multiple stacked tab portions. The arrangement of the multiple tab portions may be staggered. The length W4 of the staggering space refers to a length of the staggering space along the length direction (X direction) of the first wall 211. In the battery cell 20 provided in this example of the present application, the deviated arrangement of the electrode terminal 23 can optimize the arrangement space of the components, facilitate the staggered arrangement of the tab 2211, and make the length of the staggering space of the tab 2211 reach more than 8 mm.

Optionally, the length of the staggering space may also be greater or less than 12 mm.

By adopting the above technical solution, the battery cell 20 provided in this example can allow multiple tabs to be staggered in a larger staggering space. Referring to FIG. 10 to FIG. 16, an example of the present application provides a battery cell 20, which includes a shell 21, an electrode assembly 22, and electrode terminals 23. The electrode assembly 22 is provided with electrode connecting members 221. The electrode connecting members 221 are tabs 2211. Each electrode terminal 23 includes a body 231 and a terminal post 232 protruding from one side of the body 231. The body 231 has a first side surface 231a and a second side surface 231b arranged opposite to each other along the length direction of the first wall 211. The first side surface 231a is arranged on the side of the body 231 close to the edge of the shell 21. The distance between the first side surface 231a and the terminal post 232 is greater than the distance between the second side surface 231b and the terminal post 232, that is, the body 231 is deviated outwards relative to the terminal post 232. The body 231 includes a terminal post connecting portion 2311 and a first extending portion 2312. The first extending portion 2312 and the tab 2211 are welded together to form a first welding mark 31. A second welding mark 32 is formed on the tab 2211. The projection of the second welding mark 32 towards the electrode terminal 23 completely falls within the body 231. The battery cell 20 provided in this example provides a large staggering space for the tabs 2211 and optimizes the arrangement space of the battery cell 20.

In some other examples, the body 231 has a first side surface 231a and a second side surface 231b arranged opposite to each other along a first direction, the distance between the first side surface 231a and the terminal post 232 is greater than the distance between the second side surface 231b and the terminal post 232, and the first direction is the width direction of the body 231.

By adopting the above technical solution, the body 231 is deviated relative to the terminal post 232 in the width direction of the first wall 211, and one end of the body 231 can provide a certain avoidance space for the components in the battery cell 20, thus optimizing the arrangement space of the components in the battery cell 20. Moreover, the body 231 can be deviated towards the side where the electrode connecting member 221 is located, thus facilitating the welding between the electrode connecting member 221 and the body 231, reducing the redundancy and occupied space of the electrode connecting member 221, and helping to improve the energy density of the battery cell 20.

According to a second aspect, the present application provides a battery 100, which includes the battery cell 20 according to the first aspect.

According to a third aspect, the present application provides a power consuming apparatus, which includes the battery 100 according to the second aspect. The battery 100 is used for supplying power to the power consuming apparatus.

The power consuming apparatus may be any one of the above devices or systems applying the battery.

It needs to be stated that without conflict, the features in the examples of the present application may be freely combined with each other.

The above examples are only intended to describe rather than limit the technical solution of the present application. Although the present application has been described in detail with reference to the examples above, those skilled in the art need to understand that modifications may still be made to the technical solutions described in the foregoing examples, or equivalent replacements may be made to part of the technical features; and however, these modifications or replacements will not cause the essence of corresponding technical solutions to depart from the spirit and scope of the technical solutions in the examples of the present application, and should all included in the scope of protection of the present application.

## Claims

1. A battery cell, comprising:

   a shell, wherein a first wall of the shell is provided with an electrode leading-out hole;
   an electrode assembly, arranged in the shell, wherein the electrode assembly is provided with an electrode connecting member; and
   an electrode terminal, comprising a body and a terminal post protruding from one side of the body, wherein the terminal post penetrates through the electrode leading-out hole, and the body is arranged in the shell and is electrically connected to the electrode connecting member; and
   the body has a first side surface and a second side surface arranged opposite to each other along a first direction, and a distance between the first side surface and the terminal post is greater than a distance between the second side surface and the terminal post.

2. The battery cell according to claim 1, wherein the body comprises a terminal post connecting portion and a first extending portion, the terminal post connecting portion and the terminal post are correspondingly arranged along a thickness direction of the first wall, the first extending portion extends from the terminal post connecting portion along the first direction, and the first direction is a length direction of the first wall; and
   a first welding mark is formed between the body and the electrode connecting member, and the first welding mark is at least partially located on the first extending portion.

3. The battery cell according to claim 2, wherein the body has a third side surface and a fourth side surface arranged opposite to each other along a second direction, and the second direction is a width direction of the first wall; and
   a distance between the third side surface and the terminal post is greater than a distance between the fourth side surface and the terminal post.

4. The battery cell according to claim 2 or 3, wherein two electrode leading-out holes, two electrode connecting members, and two electrode terminals are provided respectively, and each of the electrode connecting members comprises a tab; and
   a center distance between the two tabs is less than a center distance between the two terminal posts.

5. The battery cell according to any one of claims 2 to 4, wherein the electrode connecting member comprises the tab and an adapter sheet, and the adapter sheet is respectively welded to the tab and the body; and
   the first extending portion extends towards a direction of getting away from a centerline of the shell, and the first welding mark is formed between the first extending portion and the adapter sheet.

6. The battery cell according to claim 5, wherein a second welding mark is formed between the tab and the adapter sheet, and the second welding mark is arranged on a side of the first welding mark close to a central portion of the first wall.

7. The battery cell according to claim 5 or 6, wherein the first extending portion comprises a first segment with a first thickness and a second segment with a second thickness, the first segment is arranged between the terminal post connecting portion and the second segment, and the first welding mark is located on the second segment; and the second thickness is greater than or equal to the first thickness.

8. The battery cell according to claim 7, wherein a ratio of the second thickness to the first thickness is greater than or equal to 1 and less than or equal to 3.

9. The battery cell according to claim 7 or 8, wherein the adapter sheet has a third thickness, and a ratio of the second thickness to the third thickness is greater than or equal to 1 and less than or equal to 3.

10. The battery cell according to any one of claims 7 to 9, wherein the adapter sheet is step-shaped, and the adapter sheet is connected to both the first segment and the second segment.

11. The battery cell according to any one of claims 2 to 10, wherein the first extending portion extends towards a direction of getting close to the centerline of the shell; and the electrode connecting member is a tab, and the tab is at least welded to the first extending portion.

12. The battery cell according to claim **11,** wherein the tab comprises a plurality of tab portions, the plurality of tab portions are welded together to form the second welding mark, and a projection of the second welding mark towards the electrode terminal completely falls within the body.

13. The battery cell according to claim 12, wherein

    along the length direction of the first wall, the second welding mark is deviated inwards relative to the body, and a first distance exists between an inner side edge of the second welding mark and an inner side edge of the body;
    along the width direction of the first wall, the second welding mark is deviated downwards relative to the body, and a second distance exists between a lower side edge of the second welding mark and a lower side edge of the body; and
    at least one of the first distance and the second distance is greater than or equal to 1 mm.

14. The battery cell according to claim 12 or 13, wherein a projection of the first welding mark on the body falls within a projection of the second welding mark on the body;

    along the width direction of the first wall, a third distance exists between an edge of the first welding mark and the edge of the second welding mark;
    along the length direction of the first wall, a fourth distance exists between the edge of the first welding mark and the edge of the second welding mark; and
    the third distance and the fourth distance are both greater than 0 and less than twice the width of the first welding mark.

15. The battery cell according to any one of claims 4 to 14, wherein a ratio of a thickness of the body to a thickness of the tab is greater than or equal to 3.

16. The battery cell according to any one of claims 2 to 15, wherein a penetration depth of the first welding mark on the body is less than or equal to the thickness of the body.

17. The battery cell according to claim 16, wherein the penetration depth of the first welding mark on the body is less than or equal to half of the thickness of the body.

18. The battery cell according to any one of claims 4 to 17, wherein the first wall of the shell is further provided with an electrolyte filling hole and an explosion-proof valve mounting hole, and an electrolyte filling hole baffle for sealing the electrolyte filling hole and an explosion-proof valve passing through the explosion-proof valve mounting hole are mounted on the first wall, and the electrolyte filling hole and the explosion-proof valve are spaced apart from each other;

    the electrode terminal has a first height on an inner surface of the first wall;
    the electrolyte filling hole baffle has a second height on the inner surface of the first wall; and
    the first height is equal to or unequal to the second height.

19. The battery cell according to claim 18, wherein the second height is less than the first height.

20. The battery cell according to claim 18 or 19, wherein the explosion-proof valve has a third height on the inner surface of the first wall; and
    the second height is greater than the first height, and a sum of the second height, the thickness of the tab, and a thickness of an adhesive tape attached to the tab is less than the third height.

21. The battery cell according to any one of claims 1 to 20, wherein the first direction is the width direction of the first wall.

22. The battery cell according to any one of claims 1 to 21, wherein the electrode connecting member comprises the tab, the tab has a staggering space inside the battery cell, and a length of the staggering space is greater than or equal to 8 mm.

23. A battery, comprising the battery cell according to any one of claims 1 to 22.

24. A power consuming apparatus, comprising the battery according to claim 23, wherein the battery is used for supplying power to the power consuming

apparatus.

1000

FIG. 1

100

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| **PCT/CN2024/086438** |

**A. CLASSIFICATION OF SUBJECT MATTER**

H01M 50/552(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 电池, 电极组件, 极柱, 转接片, 焊接, 焊印, battery, electrode assembly, pole, adapter piece, welding print+

**C. DOCUMENTS CONSIDERED TO BE RELEVANT**

| Category* | Citation of document, with indication, where appropriate, of the relevant passages | Relevant to claim No. |
| --- | --- | --- |
| X | CN 218385672 U (NINGDE CONTEMPORARY AMPEREX TECHNOLOGY CO., LTD.) 24 January 2023 (2023-01-24) description, paragraphs 14-15, 30, and 42-104, and figures 3 and 6-8 | 1-4, 11, 15-24 |
| Y | CN 218385672 U (NINGDE CONTEMPORARY AMPEREX TECHNOLOGY CO., LTD.) 24 January 2023 (2023-01-24) description, paragraphs 30 and 42-104, and figures 3 and 6-8 | 5-10, 12-14 |
| Y | CN 216720236 U (NINGDE CONTEMPORARY AMPEREX TECHNOLOGY CO., LTD.) 10 June 2022 (2022-06-10) description, paragraphs 78-103, and figures 2-5 | 5-10, 12-14 |
| A | CN 112751114 A (WUHAN FUHANG PRECISION INDUSTRY CO., LTD.) 04 May 2021 (2021-05-04) entire document | 1-24 |
| A | CN 215731940 U (EVE ENERGY CO., LTD.) 01 February 2022 (2022-02-01) entire document | 1-24 |

| ✓ Further documents are listed in the continuation of Box C. | ✓ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **19 June 2024** | **24 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/086438**

| C. | DOCUMENTS CONSIDERED TO BE RELEVANT | |
|---|---|---|
| Category* | Citation of document, with indication, where appropriate, of the relevant passages | Relevant to claim No. |
| A | CN 220628169 U (ENVISION POWER TECHNOLOGY (JIANGSU) CO., LTD. et al.) 19 March 2024 (2024-03-19)<br>entire document | 1-24 |

Form PCT/ISA/210 (second sheet) (July 2022)

## INTERNATIONAL SEARCH REPORT
### Information on patent family members

International application No.

**PCT/CN2024/086438**

| Patent document cited in search report | | | Publication date (day/month/year) | Patent family member(s) | | | Publication date (day/month/year) |
|---|---|---|---|---|---|---|---|
| CN | 218385672 | U | 24 January 2023 | None | | | |
| CN | 216720236 | U | 10 June 2022 | None | | | |
| CN | 112751114 | A | 04 May 2021 | CN | 214378632 | U | 08 October 2021 |
| CN | 215731940 | U | 01 February 2022 | None | | | |
| CN | 220628169 | U | 19 March 2024 | None | | | |

Form PCT/ISA/210 (patent family annex) (July 2022)

**EP 4 769 819 A1**

**Patent documents cited in the description**

- CN 202311152901